# EUROPEAN PATENT APPLICATION

(11) **EP 4 394 965 A1**
(43) Date of publication of application: **03.07.2024**
(21) Application number: 23211924.8
(22) Date of filing: 24.11.2023
(51) Int. Cl.: H01M 10/04, H01M 50/103, H01M 50/147, H01M 50/176, H01M 50/533, H01M 50/536, H01M 50/55

(54) **BATTERY CELL STRUCTURE, BATTERY MODULE AND BATTERY PACK**

(30) Priority: 28.12.2022 CN 202211701992
(71) Applicant: AESC Japan Ltd., Yokohama-Shi, Kanagawa 220-0012 (JP)
(72) Inventor: CHE, Peipei, Jiangyin City, Wuxi City, 214443 (CN); ZHANG, Jie, Jiangyin City, Wuxi City, 214443 (CN); QIAN, Jia, Jiangyin City, Wuxi City, 214443 (CN); CAO, Shengrong, Jiangyin City, Wuxi City, 214443 (CN)
(74) Representative: Becker, Eberhard

(57) **Abstract**

Disclosed are a battery cell structure, a battery module and a battery pack. The battery cell structure includes a housing (26), an electrode assembly, a top cover assembly (12) and a pin part (13). The electrode assembly is arranged in the housing (26). The electrode assembly includes a battery cell body (10) and a tab (11) extending from the battery cell body (10), the top cover assembly (12) includes a top cover body (14) and electrode terminals (15) arranged thereon. The pin part (13) includes a terminal connection part (16) and a tab guide part (17) connected to each other, and the terminal connection part (16) is connected to the electrode terminal (15). The tab guide part (17) is connected to the tab (11), the terminal connection part (16) is connected to the tab guide part (17).

## Description

### BACKGROUND

### Technical Field

The disclosure relates to the field of battery cell structures, in particular to a battery cell structure, a battery module and a battery pack.

### Description of Related Art

There are tabs and pins inside the battery, and the pins are electrically connected to the tabs. The existing technological process of welding tabs and pins is as follows: first, the tabs are ultrasonically flat-welded, then the tabs are cut, and finally the tabs and the pins are laser welded.

There are many problems in the welding method of pins and tabs. First, the cutting process of tabs will generate a lot of metal shavings, which are difficult to clean up and will remain inside the battery, which is very likely to cause insulation failure; second, the two tabs of the battery cell are wrapped on the pins from both sides. Limited by the structure of the existing pins, the tabs partially overlap with the pins. If the tabs are not cut, the thickness of the overlapping area will increase and take up the internal space of the battery as well as reduce the energy density of the battery.

### SUMMARY

The technical problem to be solved by the present disclosure is to overcome the defects of related art, which is the unreasonable connection method of pins and tabs. Because of the unreasonable connection method, the tabs are stacked on the pins and therefore take a large space, which causes low energy density of batteries.

In order to solve the above technical problems, the present disclosure provides a battery cell structure, a battery module and a battery pack.

The technical solution adopted by the present disclosure to solve the above technical problems is: a battery cell structure, which includes a housing, an electrode assembly, a top cover assembly and a pin part. The electrode assembly is arranged in the housing, and the electrode assembly includes a battery cell body and tabs extending from the battery cell body. The top cover assembly includes a top cover body and electrode terminals arranged on the top cover body. The top cover body is connected to the housing, the pin part includes a terminal connection part and a tab guide part connected to each other. The terminal connection part is connected to the electrode terminal, the tab guide part is connected to the tab, and the terminal connection part is connected to the tab guide part. One surface of the tab guide part away from the electrode assembly is an outer surface, a part of the outer surface is concaved to form a groove, and the tab is partially accommodated in the groove.

In the solution, the tab protrudes from the battery cell body and is attached to the outer surface of the tab guide part. Part of the tab is accommodated in the groove, so that part of the tab is hidden in the thickness space of the tab guide part to reduce the space occupied by the terminal ends of the tabs, thus helping to improve the energy density of the battery cell. In addition, the terminal ends of the tabs do not need to be cut, so no metal debris will be generated, and the insulation inside the battery cell is ensured.

Preferably, the tab is partially accommodated in the groove.

Preferably, the bottom of the groove has a bottom wall surface, and the bottom wall surface is recessed along a direction close to the electrode assembly to form a through groove.

Preferably, the through groove extends in a direction away from the top cover assembly from a position close to the top cover assembly.

Preferably, the through groove extends in a direction away from the top cover assembly from a position close to the top cover assembly until the through groove passes through the pin part in the direction.

Preferably, the tab is bent from one side of the tab guide part to the outer surface.

Preferably, an end part of the tab extends toward the middle of the tab guide part, and the end part of the tab is accommodated in the groove.

Preferably, the end parts of the tabs are not accommodated in the grooves.

Preferably, the electrode assembly includes a first electrode assembly and a second electrode assembly. A first tab extends from the first electrode assembly, a second tab extends from the second electrode assembly, and the first tab and the second tab respectively extend from opposite side webs of the tab guide part to the middle of the tab guide part.

Preferably, end parts of the first tab and the second tab intersect with each other, and the intersecting part is accommodated in the groove.

Preferably, the end parts of the first tab and the second tab do not intersect with each other.

Preferably, at least part of the tabs overlap each other, and the overlapping part is accommodated in the groove.

In this solution, the tabs with excessive length are overlapped and are accommodated in the groove, which reduces the space occupied by the overlapping part of the tabs in the thickness direction of the tab guide part, thereby improving the energy density of the battery cell.

Preferably, at least two of the tabs are respectively bent from the two sides of the tab guide part to the outer surface, and the terminal end of at least two of the tabs are overlapped, and the overlapping parts are accommodated in the in the groove.

In this solution, at least two tabs are bent from one side close to the electrode assembly to the outer surface, and the overlapping parts of the terminal ends of at least two tabs are accommodated in the groove, which reduces the space occupied by the overlapping parts of the terminal ends of the tabs, which helps to improve the energy density of the battery cell.

Preferably, the groove extends along the length direction of the tab guide part, and the length of the groove is greater than or equal to the length of the tab.

In this solution, since the length of the tab is less than or equal to the length of the groove, the tab may be fully placed in the groove without leaving any excess part exposed outside the groove, thereby reducing the space occupied by the tab.

Preferably, the groove is arranged in the middle of the outer surface.

In this solution, the groove is arranged in the middle of the outer surface, so that the distance between the two sides of the tab guide and the groove is the same, so that two tabs with the same length may respectively enclose the tab guide part from both sides of the tab guide part. The overlapping area of the two tabs is exactly opposite to the position of the groove to define the position of the two electrode assemblies. In addition, since the tabs of the two electrode assemblies have the same length, there is no need to take into consideration the order of the two electrode assemblies, which avoids the situation that the overlapping area of the tabs cannot be aligned with the groove due to misoperation, and the fool-proof effect is good.

Preferably, a smooth transition is formed between the side wall surface of the groove and the outer surface to form a first arc part.

In this solution, the tab extends from the outer surface to the groove, and is bent at the first arc part, which prevents the tab from being broken by being pressed by a sharp corner.

Preferably, the bottom of the groove has a bottom wall surface, and the height difference between the bottom wall surface and the outer surface is at least the thickness of a single tab.

In this solution, the two tabs enclose the tab guide part from both sides of the tab guide part respectively. The terminal end of the first tab is recessed in the groove, and the terminal end of the tab is formed with high level and low level from high to low. The second tab rests on the low level, limited by the height difference between the bottom wall surface and the outer surface, the height difference between the high level and the low level is at least the thickness of a single tab. Therefore, the upper surface of the second tab does not protrude from the upper surface of the first tab.

Preferably, the bottom of the groove has a bottom wall surface, and the bottom wall surface is recessed along a direction close to the electrode assembly to form a through groove; the tab passes through the through groove by the electrode assembly and enters the groove, and the terminal end of the tab is bent and overlapped with the bottom wall surface.

In this solution, the tab passes through the groove from the middle of the tab guide part, and the terminal end of the tab extends into the groove and rests on the bottom wall surface. In this way, the terminal end of the tab does not protrude from the outer surface, which helps to improve the energy density of the battery cell.

A battery module includes the above battery cell structure.

In this solution, the above battery cell structure is applied to the battery module, which may save the internal space of the battery module, thereby increasing the energy density of the battery module as a whole.

A battery pack includes the above-mentioned battery cell structure or the above-mentioned battery module.

In this solution, the above-mentioned cell structure or battery module is applied inside the battery pack, which may reduce the amount of invalid space inside the battery pack, thereby increasing the power contained in the battery per unit volume.

On the basis of conforming to common knowledge in the field, the above-mentioned preferred conditions may be combined freely to obtain preferred examples of the present disclosure.

The positive and progressive effect of the present disclosure is that the tab protrudes from the battery cell body and is attached to the outer surface of the tab guide part, and part of the tab is accommodated in the groove, so that part of the tab is hidden in the thickness space of the tab guide part to reduce the space occupied by the terminal end of the tab. In this way, it is possible to help to improve the energy density of the battery cell. In addition, the terminal end of the tab does not need to be cut, so no metal debris will be generated, and the insulation inside the battery cell is ensured.

### BRIEF DESCRIPTION OF THE DRAWINGS

FIG. 1 is a schematic diagram of an exploded structure of Embodiment 1 of the battery cell structure of the present disclosure.
FIG. 2 is a schematic structural diagram of a top cover assembly and pin part in FIG. 1.
FIG. 3 is an enlarged structural schematic diagram of the pin part in FIG. 2.
FIG. 4 is a schematic diagram of a tab surrounding a tab guide part in Embodiment 1 of the battery cell structure of the present disclosure.
FIG. 5 is a schematic structural diagram of the pin part in Embodiment 2 of the battery cell structure of the present disclosure.
FIG. 6 is a schematic view of the structure on the outer surface in FIG. 5.
FIG. 7 is a schematic diagram of a tab surrounding a tab guide part in Embodiment 2 of the battery cell structure of the present disclosure.

### DESCRIPTION OF THE EMBODIMENTS

The present disclosure will be more clearly and completely described below by means of embodiments and in conjunction with the accompanying drawings, but the present disclosure is not limited to the scope of the embodiments.

### Embodiment 1

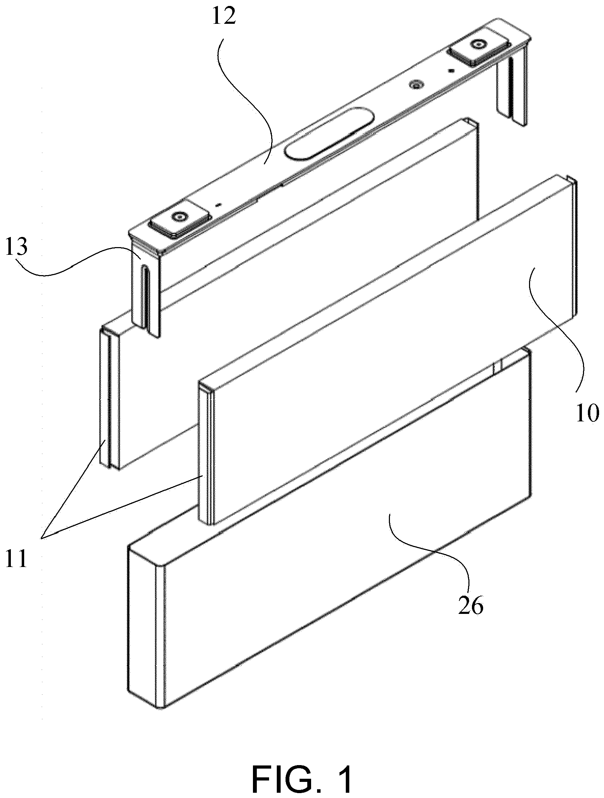

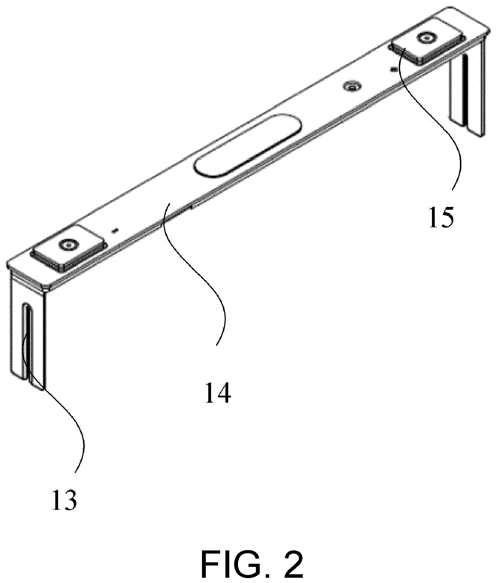

FIG. 1 to FIG. 4 show an embodiment of a battery cell structure of the present disclosure, as shown in FIG. 1 and FIG. 2, which include a housing 26, an electrode assembly, a top cover assembly 12 and a pin part 13, and the electrode assembly is provided inside the housing 26, the electrode assembly includes a battery cell body 10 and a tab 11 extending from the battery cell body 10.

The battery cell body 10 may be a stacked body or a winding core.

The top cover assembly 12 includes a top cover body 14 and electrode terminals 15 disposed on the top cover body 14, and the top cover body 14 is connected to a housing 26.

The pin part 13 includes a terminal connection part 16 and a tab guide part 17 connected to each other. The terminal connection part 16 is connected to the electrode terminal 15, the tab guide part 17 is connected to the tab 11, and the terminal connection part 16 is connected to the tab guide part 17.

One surface of the tab guide part 17 away from the electrode assembly is an outer surface 18, a part of the outer surface 18 is recessed to form a groove 19, and a part of the tab 11 is accommodated in the groove 19.

In this embodiment, part of the tab 11 is accommodated in the groove 19, so that part of the tab 11 is hidden in the thickness space of the tab guide part 17, so as to reduce the space occupied by the tab 11, thereby improving the energy density of the battery cell. In addition, because the excessive part of the tab 11 may be accommodated in the groove 19, there is no need to cut the excessive part of the terminal end of the tab 11, so no metal debris will be generated, and the insulation inside the battery cell will not be damaged due to the presence of metal debris. In this manner, it is possible to improve the safety of the battery cell.

Preferably, at least part of the tabs 11 overlap each other, and the overlapping part is accommodated in the groove 19.

It should be noted that, in some embodiments, the terminal end of the tab 11 is folded and accommodated in the groove 19; in other embodiments, the middle part of the tab 11 is folded and accommodated in the groove 19. Both of the above two implementations make it possible to hide the tab 11 in the thickness space of the tab guiding part 17 to reduce the space occupied by the tab 11.

Preferably, at least two of the tabs 11 are respectively bent from the two sides of the tab guide part 17 to the outer surface 18, and the terminal ends of at least two of the tabs 11 overlap each other, and the overlapping part is accommodated in the groove 19.

In this embodiment, the two tabs 11 are respectively bent from the two sides of the tab guide part 17 to the outer surface 18, and the overlapping part at the terminal ends of the two tabs 11 are accommodated in the groove 19, which reduces the space occupied by the overlapping part at the terminal end of the tabs, and it is possible to improve the energy density of the battery cell.

In other embodiments of the present disclosure, multiple tabs 11 are bent from one side of the tab guide part 17 to the outer surface 18, and multiple tabs 11 are bent from the other side of the tab guide part 17 to the outer surface 18. A plurality of tabs 11 on both sides are overlapped at the outer surface 18, and the overlapping part is accommodated in the groove 19.

Preferably, the groove 19 extends along the length direction of the tab guide part 17, and the length of the groove 19 is greater than or equal to the length of the tab 11.

In some embodiments, the length of the groove 19 is greater than the length of the tab 11. Since the length of the tab 11 is shorter than the length of the groove 19, the tab 11 may be completely placed in the groove 19 without leaving any excess part exposed outside the groove, thereby reducing the space occupied by the tab 11.

In some other embodiments, the length of the groove 19 is equal to the length of the tab 11, and the tab 11 may be exactly and completely set in the groove 19.

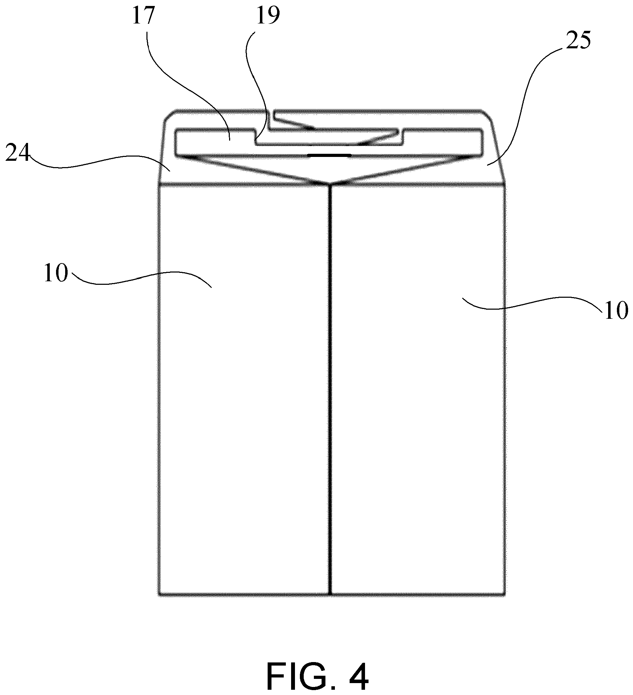

As shown in FIG. 4, in some embodiments, the number of electrode assemblies is two, the two electrode assemblies are stacked together, and the two tabs 11 enclose the tab guide part 17 from both sides of the tab guide part 17 respectively. The two tabs 11 overlap each other at the outer surface 18, and the overlapping part is arranged in the groove 19, which reduces the space occupied by the overlapping part of the tabs 11 and improves the space utilization rate.

It should be noted that the number of electrode assemblies is not limited to two. In other embodiments of the present disclosure, the number of electrode assemblies is one, and one tab 11 encloses the tab guide part 17 from one side of the tab guide part 17. The excessive part of the terminal end of the tab 11 is folded and placed in the groove 19, so as to avoid cutting the redundant tab 11 and reduce the space occupied by the terminal end of the tab 11.

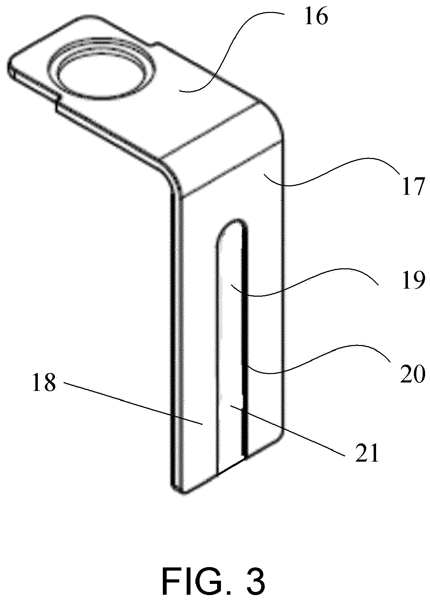

As shown in FIG. 3, in some embodiments, the groove 19 is disposed in the middle of the outer surface 18.

In this embodiment, the lengths of the two tabs 11 are the same, the two tabs 11 are bent from both sides to the outer surface 18 of the tab guide part 17, and the two tabs 11 overlap each other at the middle of the outer surface 18, and the overlapping part directly faces the position of the groove 19.

The groove 19 is arranged in the middle of the outer surface 18, so that the distance between the two sides of the tab guide part 17 and the groove 19 is the same, and therefore two tabs 11 with the same length may respectively enclose the tab guide part 17 from both sides of the tab guide part 17. The overlapping area of the two tabs 11 is exactly opposite to the position of the groove 19 to define the positions of the two electrode assemblies.

In addition, since the tabs 11 of the two electrode assemblies have the same length, it is not necessary to take into consideration the configuration sequence of the two electrode assemblies, avoiding the situation that the overlapping area of the tabs 11 cannot be aligned with the groove 19 due to misoperation, and the foolproof effect is good.

It should be noted that the position of the groove 19 is not limited to the above-mentioned middle position. In other embodiments of the present disclosure, the groove 19 may deviate from the center position of the tab guide part 17 according to actual needs, so as to accommodate the different lengths of the two tabs 11.

As shown in FIG. 3, preferably, the first arc part 20 is formed by a smooth transition between the side wall surface of the groove 19 and the outer surface 18.

In this embodiment, the tab 11 extends from the outer surface 18 to the groove 19, and is bent at the first arc part 20. Since the first arc part 20 has a smooth surface, the tab 11 is prevented from being squeezed and crushed by sharp corners.

Preferably, the bottom of the groove 19 has a bottom wall surface 21, and the height difference between the bottom wall surface 21 and the outer surface 18 is at least the thickness of a single tab 11.

As shown in FIG. 4, in some examples, the first tab 24 is bent from one side of the tab guide part 17 and encloses the tab guide part 17, and the terminal end of the first tab 24 is bent and recessed in the groove 19 to have a high level and a low level from high to low.

The second tab 25 is bent from the other side of the tab guide part 17 and encloses the tab guide part 17, and extends on the outer surface 18 to rest on a low level.

The first tab 24 is attached to the outer surface 18 and the bottom wall surface 21 of the groove 19, the height difference between the bottom wall surface 21 and the outer surface 18 is the thickness of one tab 11, and the height difference between the high level and the low level is also is the thickness of one tab 11. Therefore, the upper surface of the second tab 25 is kept aligned with the upper surface of the first tab 24, thereby reducing the protruding thickness of the tab 11.

In other embodiments of the present disclosure, the height difference between the bottom wall surface 21 and the outer surface 18 is greater than the thickness of one tab 11. In this case, the second tab 25 is recessed at the groove 19, so that the upper surface thereof does not protrude from the upper surface of the first tab 24, thereby realizing the corresponding effect.

Preferably, the terminal connecting part 16 and the tab guide part 17 form an L-shaped bent plate. The L-shaped bent plate is attached to a side of the electrode assembly, and because the bent plate is a plate itself, the bent plate occupies less space.

### Embodiment 2

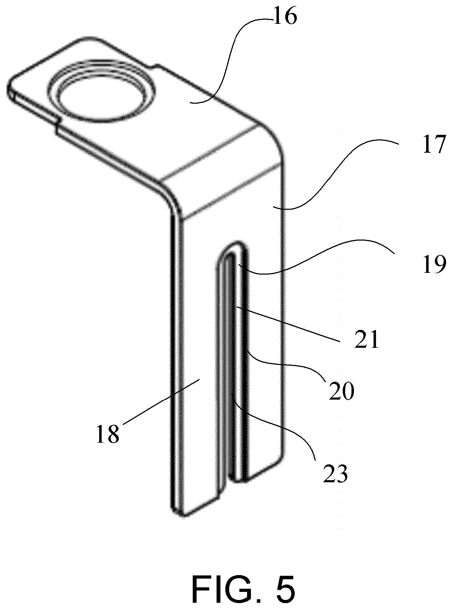

FIG. 5 to FIG. 7 show Embodiment 2 of the battery cell structure of the present disclosure, which includes a housing 26, an electrode assembly, a top cover assembly 12 and a pin part 13. The housing 26, the electrode assembly and the top cover assembly 12 are consistent with the Embodiment 1, and the pin part 13 has characteristics different from the Embodiment 1 as described below.

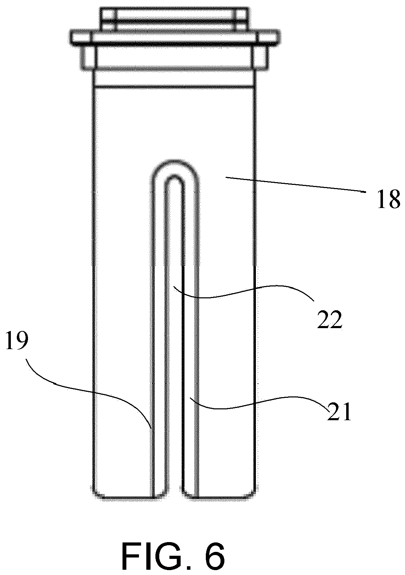

As shown in FIG. 5 and FIG. 6, in this embodiment, the bottom of the groove 19 on the tab guide part 17 has a bottom wall surface 21, the bottom wall surface 21 is recessed along the direction close to the electrode assembly to form a through groove 22. The through groove 22 cuts off the central area of the bottom wall surface 21 so that the remaining bottom wall surface 21 surrounds the edge of the through groove 22.

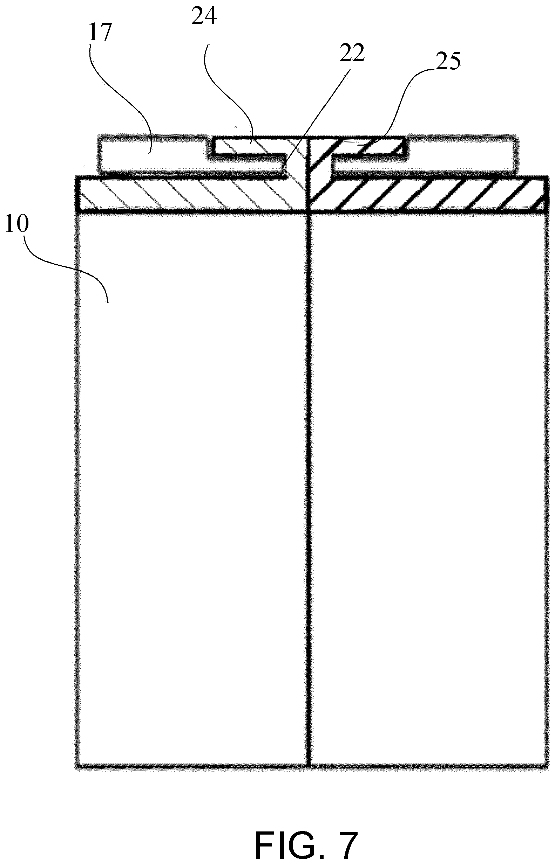

As shown in FIG. 7, the tab 11 passes through the through groove 22 from the electrode assembly and enters the groove 19, and the terminal end of the tab 11 is bent and overlaps the bottom wall surface 21.

The tab 11 adopts the above connection method, the terminal end of the tab 11 does not protrude from the outer surface 18, and the terminal end of the tab is hidden in the groove 19, which occupies the thickness space of the tab guide part 17 and does not occupy the outer surface of the tab guide part 17, thereby reducing the space occupied by the tabs in the internal space of the battery cell, which helps to improve the energy density of the battery cell.

As shown in FIG. 5, preferably, a second arc part 23 is formed by a smooth transition between the side wall surface of the through groove 22 and the bottom wall surface 21 of the groove 19.

In this example, the tab 11 protrudes from the through groove 22, bends and overlaps the bottom wall surface 21, and the tab 11 bends at the second arc part 23. Since the second arc part 23 has a smooth transition surface, it is possible to prevent the tab 11 from cracking due to being pressed by sharp corners.

As shown in FIG. 6, the through groove 22 is a U-shaped groove, and the opening of the U-shaped groove is away from the terminal connection part 16.

In this example, the pin part 13 is mounted on the jig by using a U-shaped groove, and the jig fixes the pin part 13 so as to weld the tab 11 to the tab guide part 17.

### Embodiment 3

A battery module includes the battery cell structure in the above-mentioned embodiments.

In this embodiment, the battery cell structure is applied to the battery module, which may save the internal space of the battery module, thereby increasing the energy density of the battery module as a whole.

### Embodiment 4

A battery pack includes the above battery cell structure and/or the above battery module.

In this embodiment, the above-mentioned battery cell structure or battery module is applied inside the battery pack, which may reduce the amount of invalid space inside the battery pack, thereby increasing the power contained in the battery per unit volume.

## Claims

1. A battery cell structure, comprising:
a housing (26);
an electrode assembly, arranged in the housing (26), wherein the electrode assembly comprises a battery cell body (10) and tabs (11) extending from the battery cell body (10);
a top cover assembly (12), comprising a top cover body (14) and electrode terminals (15) arranged on the top cover body (14), wherein the top cover body (14) is connected to the housing (26);
a pin part (13), comprising a terminal connection part (16) and a tab guide part (17) connected to each other, wherein the terminal connection part (16) is connected to the electrode terminal (15), the tab guide part (17) is connected to the tab (11), one surface of the tab guide part (17) away from the electrode assembly is an outer surface (18), and a part of the outer surface (18) is concaved to form a groove (19).

2. The battery cell structure according to claim 1, wherein the tab (11) is partially accommodated in the groove (19).

3. The battery cell structure according to claim 1 or 2, wherein a bottom of the groove (19) has a bottom wall surface (21), and the bottom wall surface (21) is recessed along a direction close to the electrode assembly to form a through groove (23).

4. The battery cell structure according to any one of claims 1 to 3, wherein the through groove (23) extends in a direction away from the top cover assembly (12) from a position close to the top cover assembly (12).

5. The battery cell structure according to any one of claims 1 to 4, wherein the through groove (23) passes through the pin part (13) in the direction.

6. The battery cell structure according to any one of claims 1 to 5, wherein the tab (11) is bent from one side of the tab guide part (17) to the outer surface (18).

7. The battery cell structure according to any one of claims 1 to 6, wherein an end part of the tab (11) extends toward the middle of the tab guide part (17), and the end part of the tab (11) is accommodated in the groove (19).

8. The battery cell structure according to any one of claims 1 to 7, wherein an end part of the tab (11) extends toward the middle of the tab guide part (17), and the end part of the tab (11) is not accommodated in the groove (19).

9. The battery cell structure according to any one of claims 1 to 8, wherein the electrode assembly comprises a first electrode assembly and a second electrode assembly, a first tab (24) extends from the first electrode assembly, a second tab (25) extends from the second electrode assembly, and the first tab (24) and the second tab (25) respectively extend from opposite side webs of the tab guide part (17) to the middle of the tab guide part (17).

10. The battery cell structure according to any one of claims 1 to 9, wherein end parts of the first tab (24) and the second tab (25) intersect with each other, and an intersecting part formed by the intersection of the first tab (24) and the second tab (25) is accommodated in the groove (19).

11. The battery cell structure according to any one of claims 1 to 10, wherein end parts of the first tab (24) and the second tab (25) do not intersect with each other.

12. The battery cell structure according to any one of claims 1 to 11, wherein at least part of the tabs (11) overlap each other, and an overlapping part formed by the overlap of the tabs (11) is accommodated in the groove (19).

13. The battery cell structure according to any one of claims 1 to 12, wherein at least two of the tabs (11) are respectively bent from two sides of the tab guide part (17) to the outer surface (18), and terminal ends of at least two of the tabs (11) are overlapped, and the overlapping part is accommodated in the in the groove (19).

14. The battery cell structure according to any one of claims 1 to 13, wherein the groove (19) extends along a length direction of the tab guide part (17), and a length of the groove (19) is greater than or equal to a length of the tab (11).

15. The battery cell structure according to any one of claims 1 to 14, wherein the groove (19) is disposed in the middle of the outer surface (18).

16. The battery cell structure according to any one of claims 1 to 15, wherein a smooth transition is formed between a side wall surface of the groove (19) and the outer surface (18) to form a first arc part (20).

17. The battery cell structure according to any one of claims 1 to 16, wherein a bottom of the groove (19) has a bottom wall surface (21), and a height difference between the bottom wall surface (21) and the outer surface (18) is at least a thickness of the single tab (11).

18. The battery cell structure according to any one of claims 1 to 17, wherein a bottom of the groove (19) has a bottom wall surface (21), and the bottom wall surface (21) is recessed along a direction close to the electrode assembly to form a through groove (23);
the tab (11) passes through the through groove (23) and overlaps with the bottom wall surface (21).

19. A battery module comprising the battery cell structure according to any one of claims 1 to 18.

20. A battery pack comprising the battery cell structure according to any one of claims 1 to 18.
